# EUROPÄISCHE PATENTANMELDUNG

(11) **EP 4 123 865 A1**
(43) Veröffentlichungstag der Anmeldung: **25.01.2023**
(21) Anmeldenummer: 22191931.9
(22) Anmeldetag: 26.07.2019
(51) Int. Cl.: H02J 3/38, H02J 13/00, H02J 1/06, H02H 1/00

(54) **LICHTBOGENERKENNUNG**

(30) Priorität: 27.07.2018 EP 18186047
(62) Teilanmeldung aus: 19742398.1
(71) Anmelder: FRONIUS INTERNATIONAL GmbH, 4643 Pettenbach (AT)
(72) Erfinder: Hofer, Bernd, 4643 Pettenbach (AT); Fasthuber, Christian, 4643 Pettenbach (AT); Fischereder, Franz, 4643 Pettenbach (AT); Breuer, Stefan, 4643 Pettenbach (AT); Spitzer, Walter, 4643 Pettenbach (AT); Bairhuber, Mario, 4643 Pettenbach (AT); Pfeil, Reimar, 4643 Pettenbach (AT)
(74) Vertreter: Patentanwälte Pinter & Weiss OG

(57) **Zusammenfassung**

Um einen Lichtbogen (arc) in einer Anordnung (1) zur Übertragung einer Gleichspannung (Udc) zu erkennen, ist ein Kommunikationstransformator (4) mit einer Primärwicklung (L1) und einer Sekundärwicklung (L2) vorgesehen ist, wobei die Sekundärwicklung (L2) mit einer Sendeeinrichtung (3) verbunden ist, welche ausgestaltet ist ein Kommunikationssignal (i_Tx) auf die Sekundärwicklung (L2) des Kommunikationstransformators (4) einzuprägen und wobei die Primärwicklung (L1) mit einer der Gleichspannungsleitungen (DC+, DC-) verbunden ist, um ein durch den Kommunikationstransformator (4) transformiertes Kommunikationssignal (i_Tx') auf eine der Gleichspannungsleitungen (DC+, DC-) einzuspeisen. Zur Erkennung des durch einen Lichtbogen (arc) verursachten Lichtbogensignals (i_arc) in der Anordnung (1) ist die Sekundärwicklung (L2) mit einer Lichtbogendetektionseinheit (5) verbunden, welche ausgestaltet ist ein durch den Kommunikationstransformator (4) transformiertes Lichtbogensignal (i_arc') zu detektieren.

## Beschreibung

Die gegenständliche Erfindung betrifft eine Anordnung zum Übertragen einer Gleichspannung von einer Gleichspannungsquelle über zumindest zwei Gleichspannungsleitungen an zumindest eine Gleichspannungssenke, wobei ein Kommunikationstransformator mit einer Primärwicklung und einer Sekundärwicklung vorgesehen ist, wobei die Sekundärwicklung seriell mit einer Sendeeinrichtung verbunden ist, welche ausgestaltet ist, ein Kommunikationssignal auf einen Eingang der Sekundärwicklung des Kommunikationstransformators einzuprägen und wobei die Primärwicklung mit der Gleichspannungsleitung verbunden ist, um ein durch den Kommunikationstransformator transformiertes Kommunikationssignal auf eine der Gleichspannungsleitungen einzuspeisen, wobei zur Erkennung eines durch einen Lichtbogen verursachten Lichtbogensignals in der Anordnung die Sekundärwicklung mit einer Lichtbogendetektionseinheit verbunden ist, welche ausgestaltet ist, ein durch den Kommunikationstransformator transformiertes Lichtbogensignal zu detektieren. Weiters betrifft die gegenständliche Erfindung ein Verfahren zur Detektion eines durch einen Lichtbogen erzeugten Lichtbogensignals in einer Anordnung zum Übertragen einer Gleichspannung von zumindest einer Gleichspannungsquelle über eine Gleichspannungsleitung an zumindest eine Gleichspannungssenke, wobei ein Kommunikationssignal auf eine Sekundärseite eines Kommunikationstransformators aufgeschaltet wird und über eine Primärwicklung des Kommunikationstransformators ein transformiertes Kommunikationssignal in die Gleichspannungsleitung eingespeist wird, wobei zur Erkennung des Lichtbogensignals in der Anordnung ein durch den Kommunikationstransformator transformiertes Lichtbogensignal verarbeitet wird.

Es wird in Gleichspannungsanlagen eine Gleichspannung von zumindest einer Gleichspannungsquelle zur Verfügung gestellt und über Gleichspannungsleitungen an eine Gleichspannungssenke übertragen. Als Gleichspannungsquellen kann beispielsweise eine Anzahl von Solarpanelen, bzw. Solarzellen einer Photovoltaikanlagen oder eine Batterie zur Verfügung stehen. Es wird dabei an den Solarpanelen, bzw. Solarzellen die Gleichspannung in Abhängigkeit von der jeweiligen Sonneneinstrahlung erzeugt. Als Gleichspannungssenke kann beispielsweise ein Wechselrichter dienen. Ein Wechselrichter wandelt die Gleichspannung in eine Wechselspannung und kann diese in ein elektrisches Versorgungsnetz einspeisen oder die erzeugte Wechselspannung einer elektrischen Last, wie z.B. einer elektrische Maschine oder einer Batterie, zur Verfügung stellen.

Es ist in vielen Anordnungen eine Kommunikation mit den vorhandenen Gleichspannungsquellen und/oder Gleichspannungssenken erwünscht. Von einer Steuereinheit gesendete Kommunikationssignale können beispielsweise zur Synchronisierung von einzelnen Solarpanels dienen. Insbesondere bei Auftreten eines Fehlerfalls können Kommunikationssignale auch zum Abschalten von Gleichspannungsquellen oder anderen Elementen der Anordnung dienen. Kommunikationssignale können somit beispielsweise über eigens vorgesehenen Kommunikationsleitungen oder aber direkt über die vorhandene Gleichspannungsleitung - mittels sogenannter Powerline-Kommunikation (Power Line Communication, PLC) - übertragen werden. Bei einer Powerline-Kommunikation werden bekanntermaßen die Kommunikationssignale auf das zur Energieübertragung vorhandene Grundsignal aufmoduliert und mit der Gleichspannung als Grundsignal übertragen. Die Empfangseinheit kann das aufmodulierte Kommunikationssignal durch Demodulation rückgewinnen und auswerten.

Es kann im Fehlerfall vorkommen, dass in Gleichspannungsanlagen parasitäre Lichtbögen gezündet werden. Lichtbögen bilden sich durch eine Spannung zwischen zwei voneinander beabstandeten Elementen aus. So kann es ursprünglich vorgesehen sein, dass zwei Elemente in elektrischem Kontakt stehen. Ist besagter elektrischer Kontakt jedoch fehlerhaft oder unterbrochen, so ergibt sich ein Abstand zwischen den beiden Elementen. Durch die hohe elektrische Spannung entsteht eine Ionisierung der zwischen den beiden Elementen befindlichen (und ursprünglich isolierend wirkenden Luft), wodurch sich ein Lichtbogen ausbilden kann. Ein Lichtbogen kann sich jedoch auch durch ein fehlerhaftes Isolationsmaterial (z.B. Lufteinschlüsse) zwischen zwei Elementen, welche eine hohe Potentialdifferenz aufweisen, entstehen. Dabei erfolgt ein Durchschlag durch das Isolationsmaterial, womit sich ein Lichtbogen ausbildet. Lichtbögen erlöschen üblicherweise nicht von selbst und müssen daher aktiv gelöscht werden, beispielsweise durch eine Deaktivierung der Spannungsquelle. Eine Erkennung von Lichtbögen stellt jedoch eine grundlegende Herausforderung dar, da oftmals nur ein Zünden des Lichtbogens erkannt werden kann, ein brennender Lichtbogen jedoch oft unerkannt bleibt. Das Lichtbogensignal müsste nach dem Zünden vom auftretenden Rauschen unterschieden werden, was bei bislang bekannten Verfahren nicht möglich war. Wenn der Lichtbogen brennt, so hat dieser einen geringen Pegel und weist im zeitlichen Verlauf möglicherweise keine transienten Änderungen auf.

Somit ist es insbesondere in Photovoltaikanlagen notwendig auftretende Lichtbögen zu detektieren und daraufhin das System schnell und sicher abzuschalten. Üblicherweise ist somit zur Lichtbogenerkennung extra Hardware erforderlich. Die US 2014/084942 A1 offenbart beispielsweise eine Lichtbogenerkennung, welche während den Sendepausen einer Powerline-Kommunikation aktiv wird. Über die genaue Ausgestaltung der Lichtbogenerkennungseinheit gibt die US 2014/084942 A1 jedoch keine Auskunft. Die DE 10 2014 104 205 A1 hingegen offenbart eine Photovoltaikanlage, in welcher Powerline-Kommunikation über einen mit der Gleichspannungsleitung verbundenen Transformator erfolgt. Zudem ist in einem Wechselrichter eine Detektionsschaltung zur Erkennung von Lichtbögen vorgesehen. Der Wechselrichter ist über eine Trenneinrichtung, bestehend aus Wicklungen und einem Schaltkontakt, mit der Photovoltaikanlage verbunden und kann über die Trenneinrichtung auch PLC-Signale empfangen. Die US 2013/009483 zeigt einen Kommunikationstransformator zur Übertragung eines Kommunikationssignals von einer Sekundärwicklung auf eine Primärwicklung und einer Übertragung eines Lichtbogensignals von der Primärwicklung auf die Sekundärwicklung. Die WO 2017/149038 A1 offenbart eine Signalaufbereitungseinheit für eine Sekundärseite eines Kommunikationstransformators.

Es ist eine Aufgabe der gegenständlichen Erfindung eine Lichtbogenerkennung in einer Anordnung zur Übertragung einer Gleichspannung zu implementieren, die einen möglichst geringen Hardwareaufwand verursacht.

Diese Aufgabe wird erfindungsgemäß durch eine Anordnung gelöst, wobei zur Erkennung eines durch einen Lichtbogen verursachten Lichtbogensignals die Sekundärseite eines Kommunikationstransformators mit einer Lichtbogendetektionseinheit verbunden ist, welche ausgestaltet ist ein durch den Kommunikationstransformator transformiertes Lichtbogensignal zu detektieren, wobei eine Signalaufbereitungsschaltung zwischen eine Sekundärwicklung der Sekundärseite und die Lichtbogendetektionseinheit geschaltet ist, wobei die Signalaufbereitungsschaltung ausgestaltet ist, einen durch die Sekundärwicklung fließenden Sekundärwechselstrom, welcher sich aus dem Kommunikationssignal und dem transformierten Lichtbogensignal zusammensetzt, für die Lichtbogendetektionseinheit aufzubereiten. Erfindungsgemäß umfasst die Signalaufbereitungsschaltung einen Widerstand und eine in Serie geschaltete Kapazität, wobei die Kapazität parallel zur Sekundärwicklung der Sekundärseite geschaltet ist, um mit der Sekundärwicklung einen Resonanzkreis zu bilden. Dabei ist ein Ausgang der Sekundärwicklung zwischen der Kapazität und dem Widerstand mit der Signalaufbereitungsschaltung verbunden, um bei der Lichtbogendetektionseinheit ein gedämpftes Kommunikationssignal zu bewirken. Erfindungsgemäß ist die Lichtbogendetektionseinheit weiters mit dem Widerstand verbunden, um eine am Widerstand anliegende Spannung zur Erkennung des Lichtbogens zu verarbeiten. Die Aufgabe wird ebenso durch ein Verfahren gelöst, wobei zur Erkennung des Lichtbogensignals in der Anordnung ein durch den Kommunikationstransformator transformiertes Lichtbogensignal verarbeitet wird und ein durch die Sekundärwicklung fließender Sekundärwechselstrom für die Lichtbogendetektion aufbereitet wird. Es kann somit ein durch den Lichtbogen verursachtes Lichtbogensignal zur Detektion des Lichtbogens verwendet werden, auch wenn der Lichtbogen bereits gezündet wurde.

Es kann somit ein bereits in der Anordnung vorhandener Kommunikationstransformator verwendet werden um das Lichtbogensignal auf ein transformiertes Lichtbogensignal zu transformieren. Der Kommunikationstransformator dient ursprünglich dazu, ein durch eine Sendeeinrichtung an der Sekundärwicklung angelegtes Kommunikationssignal auf eine mit der Gleichspannungsleitung verbundene Primärwicklung zu transformieren, wobei das transformierte Kommunikationssignal über die Gleichspannungsleitung übertragen wird. Ein Kommunikationstransformator ist üblicherweise in der negativen Gleichspannungsleitung angeordnet. Dies ist insbesondere der Fall, wenn in der Anordnung zumindest zwei Gleichspannungsquellen, bzw. zwei Gleichspannungssenken, vorgesehen sind, da dadurch auch zumindest zwei positive Gleichspannungsleitungen vorgesehen sind. Dadurch, dass der Kommunikationstransformator in der gemeinsamen negativen Gleichspannungsleitung vorgesehen ist, kann er mit mehreren Gleichspannungssenken bzw. Gleichspannungsquellen kommunizieren. Ansonsten wäre pro positiver Gleichspannungsleitung ein Kommunikationstransformator erforderlich. Der Kommunikationstransformator kann jedoch auch in einer Gleichspannungssenke, einer Gleichspannungsquelle, bzw. einer weiteren Komponente der Anordnung, wie in einem Wechselrichter, einem Mikroinverter, in einem Optimizer, etc. vorgesehen bzw. integriert sein.

Der Kommunikationstransformator wird erfindungsgemäß zusätzlich dazu verwendet ein auf der Primärwicklung vorhandenes Lichtbogensignal auf die Sekundärwicklung zu transformieren, wobei das transformierte Lichtbogensignal durch eine Lichtbogendetektionseinheit erkannt wird. Somit ist für die Detektion des Lichtbogens kein zusätzlicher Transformator notwendig.

In einer vorteilhaften Weise ist das Kommunikationssignal gegenüber dem transformierten Lichtbogensignal um bis zu 1/10 gedämpft.

Die Gleichspannungsquelle kann zumindest eine Photovoltaikzelle umfassen. Die Gleichspannungsquelle kann somit auch eine serielle und/oder parallele Zusammenschaltung von Photovoltaikzellen umfassen oder auch diverse Zusammenschaltungen anderer verschiedener oder gleichartiger Gleichspannungsquellen wie Photovoltaikspeicher oder (Intralogistik-)Batterien. Die Gleichspannungssenke kann zumindest einen Wechselrichter umfassen. Die Gleichspannungssenke kann auch beispielsweise elektrische Verbraucher, wie Gleichspannungs/Gleichspannungs-Stufen, Motoren, Beleuchtungen, etc. umfassen. Insbesondere bei bidirektionalen Anordnungen, z.B. mit Batterien und Wechselrichtern, können Gleichspannungsquellen und Gleichspannungssenken auch die Rolle tauschen - je nach Betriebsmodus.

Der Primärwechselstrom an der Primärwicklung des Kommunikationstransformators setzt sich für den Fall eines gesendeten Kommunikationssignals und eines auftretenden Lichtbogens aus dem transformierten Kommunikationssignal und dem Lichtbogensignal zusammen und stellt damit ein Mischsignal dar. Der Sekundärwechselstrom an der Sekundärseite des Kommunikationstransformators setzt sich gleichermaßen aus dem Kommunikationssignal und dem transformierten Lichtbogensignal zusammen und stellt ebenso ein (transformiertes) Mischsignal dar. Es kann zur Erkennung des durch den Lichtbogen verursachten Lichtbogensignals das Kommunikationssignal gegenüber dem Lichtbogensignal gedämpft werden.

Erfindungsgemäß umfasst die Signalaufbereitungsschaltung einen Widerstand und eine in Serie geschaltete Kapazität, wobei die Kapazität parallel zur Sekundärwicklung der Sekundärseite geschaltet ist und die Lichtbogendetektionseinheit mit dem Widerstand verbunden ist, um eine am Widerstand anliegende Spannung zur Erkennung des Lichtbogens zu verarbeiten. Da der Lichtbogen eine hochfrequente Spannung verursacht, erfolgt die Analyse der Spannung vorteilhafterweise im Frequenzbereich, wobei ein Hochfrequenzsensor vorgesehen sein kann.

Die Sendeeinrichtung kann lediglich mit der Sekundärwicklung verbunden sein um das Kommunikationssignal auf die Primärwicklung zu transformieren. Die Sendeeinrichtung kann auch über eine Subtraktionsschaltung mit einer weiteren Sekundärwicklung, die über die Primärwicklung ein transformiertes Mischsignal erhält, verbunden sein, wobei die Subtraktionsschaltung ausgestaltet ist das von der Sendeeinrichtung gesendete Kommunikationssignal vom transformierten Mischsignal zu subtrahieren um das transformierte Lichtbogensignal zu erhalten und zur Detektion an die Lichtbogendetektionseinheit zu übermitteln. Das von der weiteren Sekundärwicklung empfangene transformierte Mischsignal setzt sich aus dem transformierten Lichtbogensignal und dem Kommunikationssignal zusammen, wobei natürlich weitere Signalanteile, wie beispielsweise Rauschen, Teil des Mischsignals sein können. Da das (transformierte) Mischsignal durch eine Transformation eines Mischsignals der Primärwicklung auf die weitere Sekundärwicklung entsteht, wird das Mischsignal natürlich auch von der Primärwicklung auf die erste Sekundärwicklung transformiert. Dabei kann das transformierte Mischsignal an der Sekundärwicklung jedoch vom transformierten Mischsignal an der weiteren Sekundärwicklung abweichen, beispielsweise aufgrund abweichender Übersetzungen der Sekundärwicklung und der weiteren Sekundärwicklung. Durch die Anordnung aus Sekundärwicklung, weiterer Sekundärwicklung und Subtraktionsschaltung ergibt sich eine Gabelschaltung. Diese Gabelschaltung kann zusätzlich zur Signalaufbereitungsschaltung vorgesehen sein.

Die Sendeeinrichtung ist vorteilhafterweise ausgestaltet um bei einer Detektion eines Lichtbogens durch die Lichtbogendetektionseinheit ein Kommunikationssignal, vorzugsweise ein Abschaltsignal, an die Gleichspannungsquelle und/oder die Gleichspannungssenke zu übermitteln. Hierzu kann auch eine Steuereinheit vorgesehen sein, welche durch die Lichtbogendetektionseinheit mitgeteilt bekommt, dass ein Lichtbogen in der Anordnung vorhanden ist und in Folge ein entsprechendes Kommunikationssignal über die Sendeeinrichtung versendet, beispielsweise um eine Abschaltung der Gleichspannungssenke und/oder der Gleichspannungsquelle und/oder weiterer Elemente der Anordnung durchzuführen.

Es kann auch von der Sendeeinrichtung bei einer Nicht-Detektion eines Lichtbogens ein Kommunikationssignal an die Gleichspannungsquelle und/oder die Gleichspannungssenke übermittelt und erst bei einer Detektion eines Lichtbogens die Übermittlung des Kommunikationssignal gestoppt werden. Damit kann das Kommunikationssignal einem sogenannten Keep-Alive-Signal entsprechen.

Es können in der Anordnung zumindest zwei Gleichspannungssenken und/oder zumindest zwei Gleichspannungsquellen vorgesehen sein, wobei jeweils ein Stromsensor zur Detektion des Lichtbogensignals, vorzugsweise zumindest eines niederfrequenten Anteils des Lichtbogensignals, an den zumindest zwei Gleichspannungssenken bzw. zumindest zwei Gleichspannungsquellen vorgesehen ist, um die dem Lichtbogen zugehörige Gleichspannungssenke, bzw. Gleichspannungsquelle zu ermitteln.

So kann zur Erkennung einer Position des Lichtbogens in einer Anordnung mit zumindest zwei Gleichspannungssenken und/oder zumindest zwei Gleichspannungsquellen bei Detektion eines Lichtbogens durch die Lichtbogendetektionseinheit das Lichtbogensignal, vorzugsweise zumindest ein niederfrequenter Anteil des Lichtbogensignals, über einen an der Gleichspannungssenke bzw. Gleichspannungsquelle vorgesehenen Stromsensor detektiert werden, um die dem Lichtbogen zugehörige Gleichspannungssenke bzw. Gleichspannungsquelle zu ermitteln.

Sind mehrere Gleichspannungsquellen (oder auch mehrere Gleichspannungssenken) vorgesehen, so teilen sich diese üblicherweise die negative Gleichspannungsleitung. Da der Kommunikationstransformator üblicherweise in der negativen Gleichspannungsleitung angeordnet ist, kann ein Lichtbogen unter Verwendung des Kommunikationstransformators grundlegend detektiert werden. Tritt der Lichtbogen in einer positiven Gleichspannungsleitung oder in einer Gleichspannungssenke bzw. Gleichspannungsquelle auf, so kann er zwar durch die Lichtbogendetektionseinheit detektiert werden, die betreffende Gleichspannungsleitung bzw. Gleichspannungssenke bzw. Gleichspannungsquelle, jedoch nicht identifiziert werden. Hier kann ein an jeder Gleichspannungssenke bzw. Gleichspannungsquelle befindlicher Stromsensor Abhilfe schaffen. Wird ein Lichtbogen durch die Lichtbogendetektionseinheit detektiert, so kann beispielsweise der Stromverlauf aller Stromsensoren betrachtet werden und somit bestimmt werden, durch welchen Stromsensor das Lichtbogensignal fließt. Dadurch kann die Position des Lichtbogens im System eingegrenzt werden und es kann ermittelt werden in welchem Zweig, d.h. in welcher Gleichspannungsleitung, Gleichspannungssenke oder Gleichspannungsquelle der Lichtbogen auftritt.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine Anordnung mit einer Lichtbogendetektionseinheit,
Fig.2 eine Anordnung mit einer Mehrzahl an Stromsenken,
Fig.3 eine erfindungsgemäße Lichtbogendetektionseinheit mit einer Signalaufbereitungseinheit,
Fig.4 eine Gabelschaltung mit einer weiteren Sekundärwicklung und einer Subtraktionsschaltung.

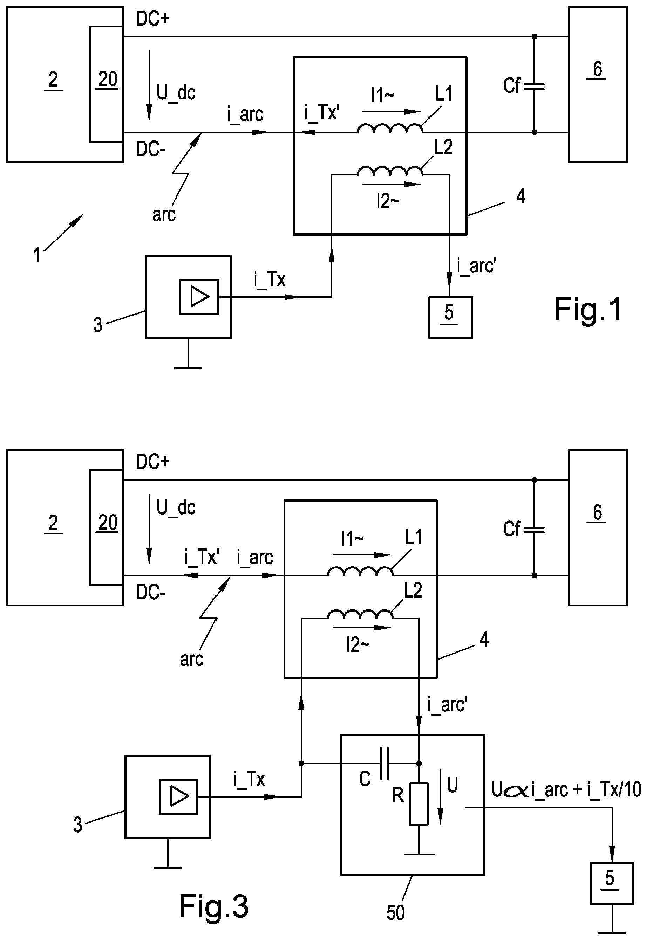

In Fig. 1 ist eine Anordnung 1 zur Übertragung einer Gleichspannung U_dc dargestellt. Es ist eine Gleichspannungsquelle 2 über eine positive Gleichspannungsleitung DC+ und eine negative Gleichspannungsleitung DC- mit einer Gleichspannungssenke 6 verbunden. Die Gleichspannungsquelle 2 kann beispielsweise eine oder mehrere Solarzellen umfassen und stellt Energie zur Verfügung, welche als Gleichspannung U_dc an die Gleichspannungssenke 6 übertragen wird. Die Gleichspannungssenke 6 kann beispielsweise einen Wechselrichter oder einen Gleichrichter umfassen und zum Einspeisen in ein Energieversorgungsnetz oder zur Energieversorgung eines Verbrauchers dienen. Als Gleichspannungssenke 6 kann natürlich auch direkt ein elektrischer Verbraucher angesehen werden.

Insbesondere in Photovoltaikanlagen können unterschiedliche Konfigurationen von Gleichspannungsquellen 2 und Gleichspannungssenken 6 vorgesehen sein, so kann beispielsweise jedes Solarpanel als Gleichspannungsquelle 2 über eine Gleichspannungsleitung DC+, DC- mit einem Wechselrichter als Gleichspannungssenke 6 verbunden sein. Es können sich mehrere Gleichspannungsquellen 2 und/oder Gleichspannungssenken 6 auch Teile der Gleichspannungsleitungen DC+, DC- teilen. Solarpanels als Gleichspannungsquelle 2 können zudem auch seriell und/oder parallel miteinander verschaltet sein. Es sind somit diverse Konfigurationen an Gleichspannungsquellen 2, Gleichspannungssenken 6 und Gleichspannungsleitungen DC+, DC- vorstellbar, womit die Erfindung nicht auf die Konfiguration in Fig. 1 eingeschränkt ist. Bei Verwendung von Batterien können die Batterien als Gleichspannungsquellen 2 oder Gleichspannungssenken 6 angesehen werden, je nachdem ob die Batterien entladen oder geladen werden. So kann je nach Betriebsart beispielsweise ein Wechselrichter bzw. Ladegerät als Gleichspannungsquelle 2 für eine Batterie als Gleichspannungssenke 6 dienen oder eine Batterie als Gleichspannungssenke 6 für einen Wechselrichter bzw. ein Ladegerät als Gleichspannungsquelle 2.

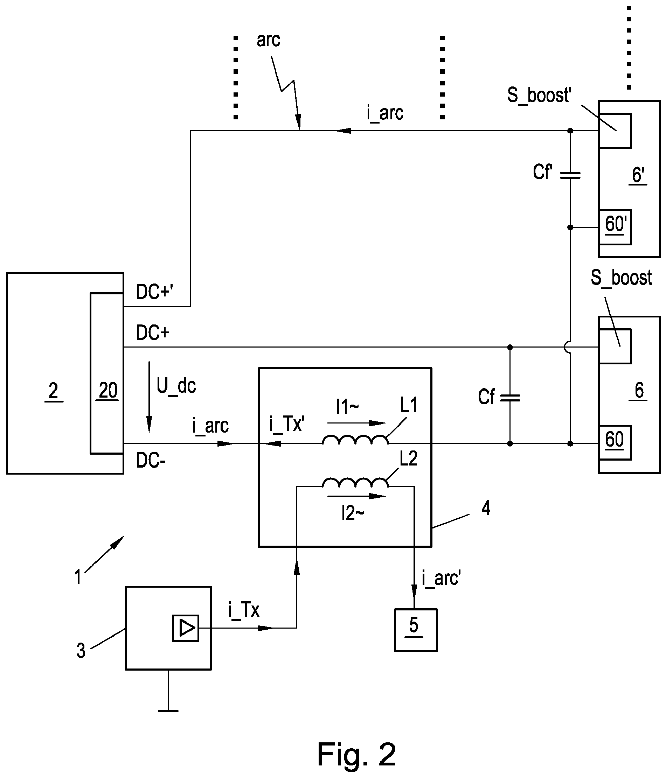

Fig. 2 offenbart eine ähnliche Anordnung mit einer Gleichspannungsquelle 2, jedoch mit einer Mehrzahl an Gleichspannungssenken 6, 6'. Die Gleichspannungssenken 6, 6' teilen sich die negative Gleichspannungsleitung DC- und haben jeweils eine zugehörige positive Gleichspannungsleitung DC+, DC+'. Es sind natürlich auch mehrere Gleichspannungsquellen 2, etc. in der Anordnung vorstellbar. Eine Mehrzahl an Gleichspannungssenken 6, 6' kann auch mehrere Stufen einer Photovoltaikanlage oder eines Wechselrichters darstellen.

Es ist in der Anordnung 1 jedenfalls ein Kommunikationstransformator 4 vorgesehen, welcher eine Primärwicklung L1 auf einer Primärseite und eine Sekundärwicklung L1 auf einer Sekundärseite umfasst. Die Primärwicklung L1 ist mit einer Gleichspannungsleitung DC+, DC- verbunden, die Sekundärseite ist mit einer Sendeeinrichtung 3 verbunden. Die Verbindung der Primärwicklung L1 mit der negativen Gleichspannungsleitung DC- ist beispielhaft, die Primärwicklung L1 könnte natürlich auch mit der positiven Gleichspannungsleitung DC+ verbunden sein. Insbesondere in Anordnungen mit mehreren positiven Gleichspannungsleitungen DC+, DC+', wie beispielsweise in Fig. 2 dargestellt, ist es üblich die Primärwicklung L1 des Kommunikationstransformators 4 in der negativen Gleichspannungsleitung DC- vorzusehen, damit der Kommunikationstransformators 4 mit allen vorhandenen Gleichspannungsquellen 2 bzw. Gleichspannungssenken 6, 6' kommunizieren kann.

Ein durch die Primärwicklung L1 fließender Primärwechselstrom I1~ wird über den Kommunikationstransformator 4 auf einen durch die Sekundärwicklung L2 fließenden Sekundärwechselstrom I2~ transformiert und umgekehrt. Vorteilhafterweise hat der Kommunikationstransformator 4 ein Übersetzungsverhältnis von 1:1, 1:2 oder 1:4 von der Primärseite auf die Sekundärseite. Weiters kann der Kommunikationstransformator 4 einen Ferritkern, z.B. einen Hiflux-Kern, vorzugsweise mit einem besonders vorteilhaften Sättigungsverhalten für Gleichströme aufweisen.

Es kann nun über die Sendeeinrichtung 3 im Rahmen einer Powerline-Kommunikation ein Kommunikationssignal i_Tx auf die Sekundärwicklung L2 der Sekundärseite eingespeist werden. Das Kommunikationssignal i_Tx wird damit über den Kommunikationstransformator 4 auf die Primärwicklung L1 der Primärseite auf ein transformiertes Kommunikationssignal i_Tx' transformiert. Das transformierte Kommunikationssignal i_Tx' an der Primärwicklung L1 wird somit dem über die negative Gleichspannungsleitung DC- fließenden Strom überlagert, bzw. aufmoduliert, womit natürlich die Gleichspannung U_dc beeinflusst wird. Damit wird das transformierte Kommunikationssignal i_Tx' über die Gleichspannungsleitungen DC+, DC- an die Gleichspannungsquelle 2 und/oder die Gleichspannungssenke 6, 6' übertragen und von einer an der Gleichspannungsquelle 2 und/oder Gleichspannungssenke 6, 6' vorgesehenen Empfangseinheit 20, 60 empfangen und demoduliert. Um den Stromkreis zur Übertragung des transformierten Kommunikationssignals i_Tx' über die Gleichspannungsleitungen DC+, DC- zu schließen, wird vorzugsweise eine Filterkapazität Cf in oder an der Gleichspannungssenke 6, 6' verwendet, um das transformierte Kommunikationssignal i_Tx' durch zu schleifen.

In Fig. 1 ist nur an der Gleichspannungsquelle 2 eine Empfangseinheit 20 vorgesehen, es kann natürlich auch oder stattdessen an der Gleichspannungssenke 6, 6' eine Empfangseinheit 60 für das transformierte Kommunikationssignal i_Tx' vorgesehen sein. Die Empfangseinheiten 20, 20' bzw. 60, 60' können dabei sowohl an der negativen Gleichspannungsleitung DC- als auch an der positiven Gleichspannungsleitung DC+ angeordnet sein. In Fig. 2 ist beispielsweise an der Gleichspannungsquelle 2 und an der Mehrzahl der Gleichspannungssenken 6, 6' jeweils eine Empfangseinheit 60, 60' vorgesehen. Als Kommunikationssignale i_Tx können beispielsweise Pulse zur Detektion von Störstellen, Signale zur Impedanzmessung, Störpegelmessungssignale, Synchronisationssignale für einzelne Stromquellen 2, wie Solarzellen, oder auch Steuersignale dienen.

Es kann sich in der Anordnung ein Lichtbogen arc, beispielsweise in einer Gleichspannungsquelle 2, einer Gleichspannungssenke 6, 6', einer Gleichspannungsleitung DC+, DC+' DC-, einer Steckverbindung der Gleichspannungsleitung DC+, DC+' DC-, oder einem weiteren Element der Anordnung 1, ausbilden. Beispielhaft ist in Fig. 1, 3 und 4 der Lichtbogen arc als Blitz in der negativen Gleichspannungsleitung DC- und in Fig. 2 als Blitz in einer der positiven Gleichspannungsleitungen DC+' gekennzeichnet. Wird ein Lichtbogen arc gezündet entsteht in der Gleichspannungsleitung DC+, DC+', DC- ein Lichtbogensignal i_arc, welches sich dem durch die Gleichspannung U_dc hervorgerufenen in den Gleichspannungsleitungen DC+, DC+', DC- fließenden Strom überlagert. Erfindungsgemäß wird die Sekundärwicklung L2 des bereits zur Übertragung von Kommunikationssignalen i_Tx vorgesehenen Kommunikationstransformators 4 mit einer Lichtbogendetektionseinheit 5 verbunden. Es wird somit ein vom Lichtbogen arc auf der Gleichspannungsleitung DC+, DCerzeugtes Lichtbogensignal i_arc von der Primärwicklung L1 des Kommunikationstransformators 4 auf ein transformiertes Lichtbogensignal i_arc' transformiert, welches an der Sekundärwicklung L2 zur Verfügung gestellt wird. Das Lichtbogensignal i_arc ist dabei hochfrequent, sodass in oder an der Gleichspannungssenke 6 eine Filterkapazität Cf zum Schließen des Stromkreises vorgesehen sein kann. Dabei ist die Filterkapazität zwischen die negative Gleichspannungsleitung DC- und die jeweilige positive Gleichspannungsleitung DC+, DC+' geschaltet. Die Filterkapazität Cf ist in den Fig. 1-4 jeweils an der Gleichspannungssenke 6, 6' angeordnet, kann jedoch auch integraler Bestandteil der jeweiligen Gleichspannungssenke 6, 6' sein.

Tritt nun gleichzeitig ein Lichtbogen arc auf, während ein Kommunikationssignal i_Tx gesendet wird, so addieren sich an der Primärwicklung L1 das Lichtbogensignal i_arc und das transformierte Kommunikationssignal i_Tx' zum Primärwechselstrom I1~. Der Kommunikationstransformator transformiert den Primärwechselstrom I~ in der Primärwicklung L1 auf den Sekundärwechselstrom I2~ der Sekundärwicklung L2. An der Sekundärseite addieren sich in analoger Weise das Kommunikationssignal i_Tx und das transformierte Lichtbogensignal i_arc' zum Sekundärwechselstrom I2~. Bei einer derartigen Überlagerung stellen Primärwechselstrom I1~ und Sekundärwechselstrom I2~ ein Mischsignal dar.

Bildet sich in der Anordnung kein Lichtbogen arc aus, so umfassen Primärwechselstrom I1~ bzw. Sekundärwechselstrom I2~ natürlich jeweils kein Lichtbogensignal i_arc, bzw. transformiertes Lichtbogensignal i_arc', jedoch das transformierte Kommunikationssignal i_Tx', bzw, das Kommunikationssignal i_Tx. Wird kein Kommunikationssignal i_Tx gesendet, so umfassen Primärwechselstrom I1~ bzw. Sekundärwechselstrom I2~ natürlich jeweils kein transformiertes Kommunikationssignal i_Tx', bzw. kein Kommunikationssignal i_Tx, jedoch das Lichtbogensignal i_arc, bzw. das transformierte Lichtbogensignal i_arc' - falls sich ein Lichtbogen arc ausbildet. Natürlich können in allen Konstellationen sowohl Primärwechselstrom I1~, als auch Sekundärwechselstrom I2~ weitere Anteile an Wechselströmen, z.B. weitere Signale, Störungen, etc. beinhalten. Es kann somit grundlegend gleichzeitig durch die Sendeeinrichtung 3 ein Kommunikationssignal i_Tx gesendet werden und durch die Lichtbogendetektionseinheit ein Lichtbogen arc, bzw. ein transformiertes Lichtbogensignal i_arc' erkannt werden.

Da auf der Sekundärseite eine Lichtbogendetektionseinheit 5 vorgesehen ist, ist ein Anbringen weiterer komplexer Hardware, beispielsweise eines weiteren Transformators, zur Erkennung eines Lichtbogens arc nicht erforderlich. Vorteilhafterweise kann durch die Sendeeinrichtung 3 ein Abschaltsignal als Kommunikationssignal i_Tx, bzw. als transformiertes Kommunikationssignal i_Tx' an die Gleichspannungsquelle 2 und/oder die Gleichspannungssenke 6, 6' gesendet werden, insbesondere wenn ein Lichtbogen arc von der Lichtbogendetektionseinheit 5 erkannt wird. Hierzu kann eine Steuereinheit vorgesehen sein, welche mit der Lichtbogendetektionseinheit 5 und der Sendeeinrichtung 3 verbunden ist und bei Detektion eines Lichtbogens arc eine dementsprechende Information von der Lichtbogendetektionseinheit 5 empfängt und daraufhin die Sendeeinrichtung 3 veranlasst, ein Kommunikationssignal i_Tx an die Gleichspannungsquelle 2 und/oder die Gleichspannungssenke 6, 6' zu senden, beispielsweise um die Gleichspannungsquelle 2 bzw. die Gleichspannungssenke 6, 6' zu deaktivieren und damit den Lichtbogen arc zu löschen. Es kann natürlich auch ein Warnsignal ausgegeben werden, wenn ein Lichtbogen arc detektiert wird. Wird als Kommunikationssignal i_Tx ein sogenanntes "Keep-Alive"-Signal gesendet, so kann die Gleichspannungsquelle 2 bzw. die Gleichspannungssenke 6, 6' deaktiviert werden, wenn das Kommunikationssignal i_Tx aufgrund einer Detektion eines Lichtbogens arc nicht mehr gesendet wird. Für den Empfang des Abschaltsignals bzw. des "Keep-Alive"-Signals als Kommunikationssignal ist entsprechend die Empfangseinheit 20 60 vorgesehen.

In Fig. 2 ist, wie erwähnt, eine Mehrzahl von Gleichspannungssenken 6, 6' vorgesehen. Tritt ein Lichtbogen arc in einer positiven Gleichspannungsleitung DC+ oder in einer Gleichspannungssenke 6, 6' auf, so wird das Lichtbogensignal i_arc auch in der negativen Gleichspannungsleitung DC- übertragen und kann durch die Lichtbogendetektionseinheit 5 detektiert werden. Es kann jedoch damit üblicherweise kein Schluss auf eine Position des Lichtbogens arc getroffen werden. Um zu ermitteln, in welchem Zweig, d.h. in welcher Gleichspannungsleitung DC-, DC+, DC+', bzw. in welcher Gleichspannungssenke 6, 6' (oder bei Vorhandensein mehrere Gleichspannungsquellen 2, in welcher Gleichspannungsquelle 2) der Lichtbogen auftritt, kann ein Stromsensor S_boost, S_boost' an oder in den Gleichspannungssenken 6, 6' (bzw. den Gleichspannungssenken 2) vorgesehen sein. Der Stromsensor S_boost, S_boost' ist dabei vorzugsweise integraler Bestandteil einer Gleichspannungssenke 6, 6'. Ist eine Filterkapazität Cf ebenso als integraler Bestandteil der Gleichspannungssenke 6, 6' vorgesehen, so kann der Stromsensor S_boost, S_boost' nach der Filterkapazität Cf in den Stromkreis geschaltet sein.

Wird durch die Lichtbogendetektionseinheit 5 ein Lichtbogen arc erkannt, so kann über den jeweiligen Stromsensor S_boost, S_boost', erkannt werden in welchem Zweig der Lichtbogen arc auftritt. Dies ist möglich, da das Lichtbogensignal i_arc, bzw. zumindest ein niederfrequenter Anteil des Lichtbogensignals i_arc, nur durch diesen betreffenden Stromsensor S_boost, S_boost' fließt und nicht durch die Stromsensoren S_boost, S_boost' die den anderen Gleichspannungssenken 6, 6' zugehörig sind.

Als Stromsensor S_boost, S_boost' kann jeweils ein bereits an den Gleichspannungssenken 6, 6' vorhandener Stromsensor verwendet werden. Insbesondere Inverswandler als Gleichspannungssenken 6, 6 weisen derartige Stromsensoren auf. Die Stromsensoren S_boost sind alleine nicht in der Lage einen brennenden Lichtbogen arc mit ausreichender Sicherheit zu erkennen und müssen daher in Zusammenspiel mit der Lichtbogendetektionseinheit 5 verwendet werden.

Fig. 3 zeigt eine Ausgestaltung der Erfindung. Der Kommunikationstransformator 4 weist auf der Sekundärseite eine Sekundärwicklung L2 und auf der Primärseite eine Primärwicklung L1 auf. Die Primärwicklung L1 ist mit der Gleichspannungsleitung DC+, DC- verbunden, es ist hier eine Signalaufbereitungsschaltung 50 zwischen die Sekundärwicklung L2 und die Lichtbogendetektionseinheit 5 geschaltet. Das Lichtbogensignal i_arc ist jedoch hochfrequent, sodass es im Zeitbereich schwer detektierbar ist und beinahe abgesehen von einer Transienten während der Zündung wie ein Gleichstrom erscheint. Die Signalaufbereitungsschaltung 50 dient daher dazu, den durch die Sekundärwicklung L2 fließenden Sekundärwechselstrom I2~ aufzubereiten. Damit kann eine einfachere Detektion des Lichtbogensignals i_arc, bzw. des transformierten Lichtbogensignals i_arc' durch die Lichtbogendetektionseinheit 5 ermöglicht werden. Die Signalaufbereitungsschaltung 50 kann somit vorteilhafterweise derart ausgeführt sein, dass eine verbesserte Erkennung eines Lichtbogen arc während einem Senden eines Kommunikationssignal i_Tx ermöglicht wird. Dies kann erfolgen, indem hinsichtlich der Lichtbogendetektionseinheit 5 das Kommunikationssignal i_Tx gegenüber dem transformierten Lichtbogensignal i_arc' gedämpft wird. Es kann eine Filterkapazität Cf an der Gleichspannungssenke 6, 6', beispielsweise eine Eingangskapazität eines Wechselrichters als Gleichspannungssenke 6, 6' verwendet werden. Hierzu kann die Signalaufbereitungsschaltung 50 einen Widerstand R und eine in Serie geschaltete Kapazität C mit einer bevorzugten Größenordnung von 70 bis 120nF umfassen, wobei eine Grundfrequenz im kHz Bereich, vorzugsweise 130kHz vorgesehen sein kann. Die Kapazität C ist parallel zur Sekundärwicklung L2 der Sekundärseite geschaltet, die Lichtbogendetektionseinheit 5 ist weiters mit dem Widerstand R verbunden um eine am Widerstand R anliegende Spannung U_R zur Erkennung des Lichtbogensignals i_arc' zu verarbeiten. Da die Sendeinheit 3 ebenso in Serie zur Sekundärwicklung geschaltet ist, wird somit ein Resonanzkreis erzeugt, welcher aus Sicht der Lichtbogendetektionseinheit 5 ein um bis zu 1/10 gedämpftes Kommunikationssignal i_Tx gegenüber dem transformierten Lichtbogensignal i_arc' bewirkt. Damit ergibt sich am Widerstand R eine Spannung U, die proportional zu i_Tx/10 + i_arc' ist. Damit ist insbesondere bei Senden eines Kommunikationssignals i_Tx eine sichere Erkennung eines transformierten Lichtbogensignals i_arc' und damit eines in der Anordnung 1 auftretenden Lichtbogens arc möglich.

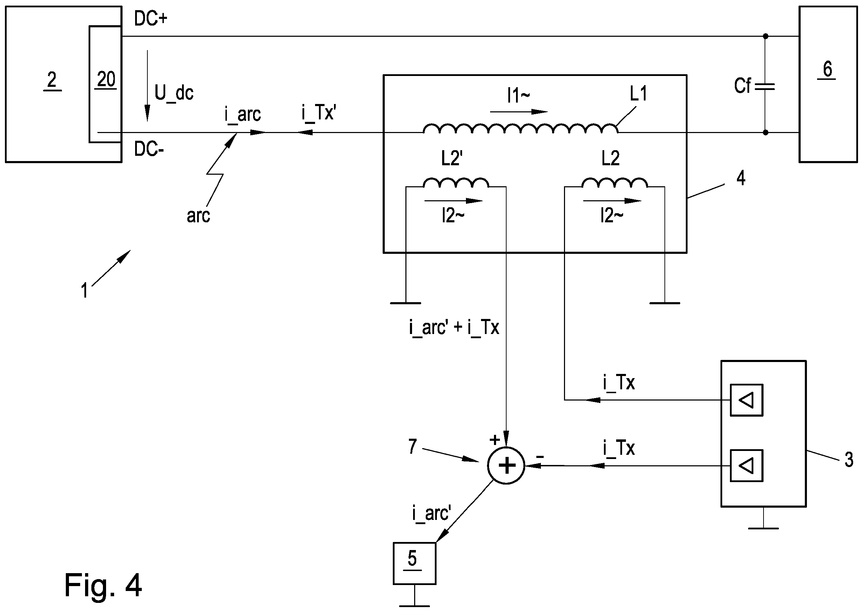

In der in Fig. 3 dargestellten Ausgestaltung ist die Sendeeinrichtung 3, wie auch die Lichtbogendetektionseinheit 5 mit der Sekundärwicklung L2 verbunden. Es kann als weitere bevorzugte Ausgestaltung auch ein Kommunikationstransformator 4 mit einer zweiten Sekundärwicklung L2' vorgesehen sein, wobei die Sendeeinrichtung 3 über eine Subtraktionsschaltung 7 mit der weiteren Sekundärwicklung L2' verbunden ist - wie in Fig. 4 dargestellt. Die Sendeeinrichtung 3 ist dabei auch mit der Sekundärwicklung L2 verbunden um das Kommunikationssignal i_Tx auf die Primärwicklung L1 zu transformieren. Somit ergibt sich eine Gabelschaltung. Die Sekundärwicklung L2' erhält hier über die Primärwicklung L1 ein Mischsignal i_Tx+i_arc', dass sich aus Kommunikationssignal i_Tx und transformiertem Lichtbogensignal i_arc' zusammensetzt. Die Subtraktionsschaltung 7 ist derart ausgestaltet um das von der Sendeeinrichtung 3 gesendete Kommunikationssignal i_Tx vom empfangenen Mischsignal i_Tx+i_arc' zu subtrahieren um somit das transformierte Lichtbogensignal i_arc' zu erhalten. Hierzu wird ein negativer Eingang mit der Sendeeinrichtung 3 verbunden und ein positiver Eingang mit der weiteren Sekundärwicklung. Das transformierte Lichtbogensignal i_arc' kann an die Lichtbogendetektionseinheit 5 übermittelt werden, um den Lichtbogen arc zu detektieren.

Das Lichtbogensignal i_arc wird jedoch üblicherweise auch über die erste Sekundärwicklung L2 auf die Sekundärseite transformiert. Um nun zu verhindern, dass ein über die erste Sekundärwicklung L2 transformierte Lichtbogensignal i_arc' auch dem negativen Eingang der Subtraktionsschaltung 7 zugeführt wird, kann an der Sendeeinrichtung - wie in Fig. 4 angedeutet - ein extra Verstärker vorgesehen sein, der dafür Sorge trägt, dass lediglich das Kommunikationssignal i_Tx dem negativen Eingang der Subtraktionsschaltung 7 zugeführt wird. Damit wird eine Rückkopplung des Kommunikationssignals i_Tx verhindert, da das Kommunikationssignal i_Tx von der Sendeeinrichtung 3 separat auf die Sekundärwicklung L2 und in die Subtraktionsschaltung 7 eingeprägt wird, was hier über zwei separate Verstärker erfolgt.

Natürlich ist auch eine Ausgestaltung vorstellbar, die eine Signalaufbereitungsschaltung 50, beispielsweise nach Fig.3, und eine Gabelschaltung nach Fig.4 kombiniert, um einen Lichtbogen arc sicher zu erkennen.

## Patentansprüche

1. Anordnung (1) zum Übertragen einer Gleichspannung (U_dc) von zumindest einer Gleichspannungsquelle (2) über zumindest zwei Gleichspannungsleitungen (DC+, DC+', DC-) an zumindest eine Gleichspannungssenke (6, 6'), wobei ein Kommunikationstransformator (4) mit einer Primärwicklung (L1) und einer Sekundärwicklung (L2) vorgesehen ist, wobei die Sekundärwicklung (L2) seriell mit einer Sendeeinrichtung (3) verbunden ist, welche ausgestaltet ist, ein Kommunikationssignal (i_Tx) auf einen Eingang der Sekundärwicklung (L2) des Kommunikationstransformators (4) einzuprägen und wobei die Primärwicklung (L1) mit einer der Gleichspannungsleitungen (DC+, DC-) verbunden ist, um ein durch den Kommunikationstransformator (4) transformiertes Kommunikationssignal (i_Tx') auf eine der Gleichspannungsleitungen (DC+, DC-) einzuspeisen, wobei zur Erkennung eines durch einen Lichtbogen (arc) verursachten Lichtbogensignals (i_arc) in der Anordnung (1) die Sekundärwicklung (L2) mit einer Lichtbogendetektionseinheit (5) verbunden ist, welche ausgestaltet ist, ein durch den Kommunikationstransformator (4) transformiertes Lichtbogensignal (i_arc') zu detektieren, **dadurch gekennzeichnet, dass** eine Signalaufbereitungsschaltung (50) zwischen die Sekundärwicklung (L2) der Sekundärseite und die Lichtbogendetektionseinheit (5) geschaltet ist, wobei die Signalaufbereitungsschaltung (50) ausgestaltet ist, einen durch die Sekundärwicklung (L2) fließenden Sekundärwechselstrom (I2~), welcher sich aus dem Kommunikationssignal (i_Tx) und dem transformierten Lichtbogensignal (i_arc') zusammensetzt, für die Lichtbogendetektionseinheit (5) aufzubereiten, **dass** die Signalaufbereitungsschaltung (50) einen Widerstand (R) und eine in Serie geschaltete Kapazität (C) umfasst, wobei die Kapazität (C) parallel zur Sekundärwicklung (L2) der Sekundärseite geschaltet ist, um mit der Sekundärwicklung (L2) einen Resonanzkreis zu bilden, und wobei ein Ausgang der Sekundärwicklung (L2) zwischen der Kapazität (C) und dem Widerstand (R) mit der Signalaufbereitungsschaltung (50) verbunden ist, um bei der Lichtbogendetektionseinheit (5) ein gedämpftes Kommunikationssignal (i_Tx) zu bewirken, **und dass** die Lichtbogendetektionseinheit (5) mit dem Widerstand (R) verbunden ist, um eine am Widerstand (R) anliegende Spannung (U) zur Erkennung des Lichtbogens (i_arc) zu verarbeiten.

2. Anordnung (1) nach Anspruch 1, **dadurch gekennzeichnet, dass** das Kommunikationssignal (i_Tx) gegenüber dem transformierten Lichtbogensignal i_arc' um bis zu 1/10 gedämpft ist.

3. Anordnung (1) nach Anspruch 1 oder 2, **dadurch gekennzeichnet, dass** die zumindest eine Gleichspannungsquelle (2) zumindest eine Photovoltaikzelle umfasst, **und dass** die zumindest eine Gleichspannungssenke (6, 6') zumindest einen Wechselrichter umfasst.

4. Anordnung (1) nach einem der Ansprüche 1 bis 3, **dadurch gekennzeichnet, dass** die Sendeeinrichtung (3) ausgestaltet ist abhängig von einer Detektion oder Nicht-Detektion eines Lichtbogens (i_arc) durch die Lichtbogendetektionseinheit (5) ein Kommunikationssignal (Tx), an die Gleichspannungsquelle (2) und/oder die Gleichspannungssenke (6, 6') zu übermitteln.

5. Anordnung (1) nach einem der Ansprüche 1 bis 4, **dadurch gekennzeichnet, dass** zumindest zwei Gleichspannungssenken (6, 6') und/oder zumindest zwei Gleichspannungsquellen (2) vorgesehen sind, **und dass** jeweils ein Stromsensor (S_boost) zur Detektion des Lichtbogensignals (i_arc), vorzugsweise zumindest eines niederfrequenten Anteils des Lichtbogensignals (i_arc), an den zumindest zwei Gleichspannungssenken (6, 6') bzw. zumindest zwei Gleichspannungsquellen (2) vorgesehen ist, um die dem Lichtbogen (arc) zugehörige Gleichspannungssenke (6, 6'), bzw. Gleichspannungsquelle (2) zu ermitteln.

6. Verfahren zur Detektion eines durch einen Lichtbogen (arc) erzeugten Lichtbogensignals (i_arc), in einer Anordnung (1) zum Übertragen einer Gleichspannung (Udc) von zumindest einer Gleichspannungsquelle (2) über zumindest zwei Gleichspannungsleitungen (DC+, DC-) an zumindest eine Gleichspannungssenke (6, 6'), wobei ein Kommunikationssignal (Tx) auf eine Sekundärwicklung (L2) eines Kommunikationstransformators (4) aufgeschaltet wird und über eine Primärwicklung (L1) des Kommunikationstransformators (4) ein transformiertes Kommunikationssignal (Tx') in die Gleichspannungsleitung (DC+, DC+', DC-) eingespeist wird, **dadurch gekennzeichnet, dass** zur Erkennung des Lichtbogensignals (i_arc) in der Anordnung (1) ein durch den Kommunikationstransformator (4) transformiertes Lichtbogensignal (i_arc') verarbeitet wird, wobei ein durch die Sekundärwicklung (L2) fließender und aus dem Kommunikationssignal (i_Tx) und dem transformierten Lichtbogensignal (i_arc') zusammengesetzter Sekundärwechselstrom (I2~) für die Lichtbogendetektion aufbereitet wird, wobei zur Erkennung des durch den Lichtbogen (arc) verursachten Lichtbogensignals (i_arc) das Kommunikationssignal (i_Tx) gegenüber dem Lichtbogensignal (i_arc) gedämpft wird.

7. Verfahren nach Anspruch 6, **dadurch gekennzeichnet, dass** das Kommunikationssignal (i_Tx) gegenüber dem transformierten Lichtbogensignal i_arc' um bis zu 1/10 gedämpft wird.

8. Verfahren nach Anspruch 6 oder 7, **dadurch gekennzeichnet, dass** bei einer Detektion eines Lichtbogens ein Kommunikationssignal (i_Tx), vorzugsweise ein Abschaltsignal, an die zumindest eine Gleichspannungsquelle (2) und/oder die zumindest eine Gleichspannungssenke (6, 6') gesendet wird.

9. Verfahren nach Anspruch 6 bis 8, **dadurch gekennzeichnet, dass** bei einer Nicht-Detektion eines Lichtbogens (i_arc) ein Kommunikationssignal (i_Tx) an die zumindest eine Gleichspannungsquelle (2) und/oder die zumindest eine Gleichspannungssenke (6, 6') übermittelt wird **und dass** bei einer Detektion eines Lichtbogens (i_arc) die Übermittlung des Kommunikationssignal (i_Tx) gestoppt wird.

10. Verfahren nach einem der Ansprüche 6 bis 9, **dadurch gekennzeichnet, dass** bei Detektion eines Lichtbogens (arc) durch die Lichtbogendetekionseinheit (5) zur Erkennung einer Position des Lichtbogens (arc) in einer Anordnung (1) mit zumindest zwei Gleichspannungssenken (6, 6') und/oder zumindest zwei Gleichspannungsquellen (2) das Lichtbogensignal (i_arc), vorzugsweise zumindest ein niederfrequenter Anteils des Lichtbogensignals (i_arc), über einen an der zugehörigen Gleichspannungssenke (6, 6') bzw. Gleichspannungsquelle (2) vorgesehenen Stromsensor (S_boost, S_boost') detektiert wird, um die dem Lichtbogen (arc) zugehörige Gleichspannungssenke (6, 6') bzw. Gleichspannungsquelle (2) zu ermitteln.
